# EUROPÄISCHE PATENTSCHRIFT

(11) **EP 2 565 956 B1**
(45) Veröffentlichungstag und Bekanntmachung des Hinweises auf die Patenterteilung: **30.03.2016**
(21) Anmeldenummer: 12179331.9
(22) Anmeldetag: 06.08.2012
(51) Int. Cl.: H01M 2/06, H01M 2/10, H01M 2/08, H01M 2/30, B25F 5/02

(54) **Akkumulator**
Accumulator
Accumulateur

(30) Priorität: 30.08.2011 DE 102011081819
(43) Veröffentlichungstag der Anmeldung: 06.03.2013
(73) Patentinhaber: ROBERT BOSCH GMBH, 70442 Stuttgart (DE)
(72) Erfinder: Baumgartner, Josef, 70376 Stuttgart (DE)

(56) Entgegenhaltungen:
- EP-A1- 2 487 736
- DE-U1-202008 012 599
- US-A- 5 620 808
- US-A1- 2009 274 948
- US-A1- 2010 227 217
- US-A1- 2010 266 878

## Beschreibung

### Stand der Technik

Die Erfindung geht aus von einem Akkumulator, insbesondere einem Handwerkzeugmaschinenakkumulator, nach dem Oberbegriff des Anspruchs 1. Ein solcher Akkumulator ist z.B. aus dem Dokument US 5 620 808 A bekannt.

### Offenbarung der Erfindung

Die Erfindung geht aus von einem Akkumulator, insbesondere von einem Handwerkzeugmaschinenakkumulator, mit einem Gehäuse, mit zumindest einem Energiespeichermodul und mit zumindest einer Kontakteinheit, die zumindest ein Kontaktelement aufweist, das sich zumindest teilweise durch eine Wandung des Gehäuses hindurch erstreckt.

Es wird vorgeschlagen, dass der Akkumulator zumindest eine Dichtungseinheit umfasst, die zu einer staub- und/oder wasserdichten Verbindung zwischen dem Kontaktelement und dem Gehäuse vorgesehen ist. Unter einem "Energiespeichermodul" soll in diesem Zusammenhang insbesondere ein Element verstanden werden, das dazu vorgesehen ist, insbesondere elektrische Energie aufzunehmen, zu speichern und wieder abzugeben. Vorzugsweise können mehrere Energiespeichermodule zusammengeschaltet werden, um insbesondere eine Speicherkapazität vorteilhaft zu erhöhen.

Unter "vorgesehen" soll insbesondere speziell ausgestaltet, ausgelegt und/oder ausgestattet verstanden werden.

Unter einer "Kontakteinheit" soll in diesem Zusammenhang insbesondere eine Einheit verstanden werden, die dazu vorgesehen ist, insbesondere eine elektrische Verbindung zwischen dem Akkumulator und einer Handwerkzeugmaschine und/oder einem Akkumulatorladegerät herzustellen. Unter einem "Kontaktelement" soll in diesem Zusammenhang insbesondere ein Element insbesondere der Kontakteinheit verstanden werden, das aus einem elektrisch leitfähigen Material, wie insbesondere aus einem Metall, hergestellt ist und das dazu vorgesehen ist, insbesondere einen elektrischen Kontakt zwischen insbesondere innerhalb des Akkumulators angeordneten Elementen der Kontakteinheit, wie insbesondere einer Leiterplatte, und/oder dem zumindest einen Energiespeichermodul und von außen anschließbaren Geräten, wie insbesondere einer Handwerkzeugmaschine und/oder einem Akkumulatorladegerät, herzustellen. In einem besonders bevorzugten Ausführungsbeispiel ist das zumindest eine Kontaktelement aus einem Metallblech herausgestanzt ausgebildet. Besonders bevorzugt erstreckt sich eine Haupterstreckungsebene des Kontaktelements in einem montierten Zustand zumindest im Wesentlichen senkrecht zur Wandung des Gehäuses.

Unter einer "Dichtungseinheit" soll in diesem Zusammenhang insbesondere eine Einheit verstanden werden, die dazu vorgesehen ist, insbesondere ein Eindringen von unerwünschten Störeinflüssen, wie insbesondere Flüssigkeit, Feuchtigkeit, Öl, Staub, Schutzpartikel oder andere, einem Fachmann als sinnvoll erscheinende Störeinflüsse, zu verringern und vorzugsweise vollständig zu verhindern. Unter "staub- und/oder wasserdicht" soll in diesem Zusammenhang insbesondere verstanden werden, dass ein Eindringen von Feuchtigkeit, Flüssigkeit sowie Festkörpern insbesondere zumindest im Wesentlichen reduziert, vorzugsweise vollständig verhindert werden kann. Vorzugsweise entspricht die Dichtungseinheit nach der DIN EN 60529 zumindest der Schutzklasse 2 (Schutz gegen den Zugang mit einem Finger und gegen feste Fremdkörper (Durchmesser ab 12,5 mm)), vorzugsweise zumindest der Schutzklasse 3 (Schutz gegen den Zugang mit einem Werkzeug und gegen feste Fremdkörper (Durchmesser ab 2,5 mm)), bevorzugt zumindest der Schutzklasse 4 (Schutz gegen den Zugang mit einem Draht und gegen feste Fremdkörper (Durchmesser ab 1,0 mm)) und besonders bevorzugt zumindest der Schutzklasse 5 (Schutz gegen den Zugang mit einem Draht und staubgeschützt) gegen das Eindringen von Fremdkörpern. In einem besonders bevorzugten Ausführungsbeispiel entspricht die Dichtungseinheit nach der DIN EN 60529 zumindest der Schutzklasse 6 (Schutz gegen den Zugang mit einem Draht und staubdicht). Alternativ oder zusätzlich entspricht die Dichtungseinheit nach der DIN EN 60529 vorzugsweise zumindest der Schutzklasse 4 (Schutz gegen allseitiges Spritzwasser), vorzugsweise zumindest der Schutzklasse 4 (Schutz gegen Strahlwasser (Düse) aus beliebigem Winkel) bevorzugt zumindest der Schutzklasse 6 (Schutz gegen starkes Strahlwasser) und besonders bevorzugt zumindest der Schutzklasse 7 (Schutz gegen zeitweiliges Untertauchen) gegen das Eindringen von Fremdkörpern. In einem besonders bevorzugten Ausführungsbeispiel entspricht die Dichtungseinheit nach der DIN EN 60529 zumindest der Schutzklasse 8 (Schutz gegen dauerndes Untertauchen). In einem besonders bevorzugten Ausführungsbeispiel entspricht die Dichtungseinheit zumindest der Klassifizierung IP56, vorzugsweise zumindest der Klassifizierung IP67, nach DIN EN 60529.

Unter "zumindest im Wesentlichen" soll insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht.

Die Dichtungseinheit kann vorzugsweise einen Dichtungsring, eine Klebeverbindung, eine Presspassung oder andere einem Fachmann als sinnvoll erscheinende Dichtungselemente umfassen.

Durch die erfindungsgemäße Ausgestaltung kann auf konstruktiv einfache Weise ein vorteilhaft hoher Schutz von insbesondere innerhalb des Akkumulators angeordneten Elementen erreicht werden. Dadurch wird eine bevorzugt robuste Ausgestaltung des Akkumulators erreicht werden und der erfindungsgemäße Akkumulator kann flexibel in unterschiedlichen Arbeitsumgebungen eingesetzt werden. Zudem kann eine vorteilhaft hohe Lebensdauer und eine bevorzugt geringe Störungs- und Reparaturanfälligkeit des erfindungsgemäßen Akkumulators erreicht werden.

Ferner wird vorgeschlagen, dass die Dichtungseinheit einstückig mit dem Kontaktelement und/oder mit dem Gehäuse ausgebildet ist. Unter "einstückig" soll in diesem Zusammenhang insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Dadurch können vorteilhaft Bauteile und Kosten eingespart werden. Ferner kann ein Verlust der Dichtungseinheit, beispielsweise bei einer Reparatur oder einer Wartung, vorteilhaft einfach verhindert werden.

Des Weiteren wird vorgeschlagen, dass die Dichtungseinheit eine stoffschlüssige Verbindung zwischen dem Kontaktelement und/oder dem Gehäuse umfasst. Unter einer "stoffschlüssigen Verbindung" soll in diesem Zusammenhang insbesondere verstanden werden, dass die Masseteile durch atomare oder molekulare Kräfte zusammengehalten werden, wie beispielsweise beim Löten, Schweißen, Kleben, Vulkanisieren und/oder bei einem Anspritzen. Vorzugsweise kann alternativ oder zusätzlich eine Dichtlippe vorgesehen sein, die stoffschlüssig mit dem Gehäuse verbunden ist.

Dadurch kann eine vorteilhaft sichere zumindest im Wesentlichen vollständige Abdichtung zwischen dem zumindest einen Kontaktelement und dem Gehäuse des erfindungsgemäßen Akkumulators erreicht werden.

Zudem wird vorgeschlagen, dass das Kontaktelement zumindest teilweise von dem Gehäuse umspritzt ist. Unter "zumindest teilweise umspritzt" soll in diesem Zusammenhang insbesondere verstanden werden, dass zumindest 20 %, vorzugsweise zumindest 30 %, bevorzugt zumindest 50 % und besonders bevorzugt zumindest 60 % zumindest eines Querschnitts des Kontaktelements von einem Material des Gehäuses umgeben sind und dass das Material des Gehäuses durch ein Anspritzverfahren in diesem Bereich stoffschlüssig mit dem Kontaktelement verbunden ist.

Durch die erfindungsgemäße Ausgestaltung der Dichtungseinheit des Akkumulators kann auf konstruktiv einfache und vorteilhaft kostengünstige Weise eine bevorzugt hohe und sichere Wasser- und/oder Staubdichtheit erreicht werden.

Ferner wird vorgeschlagen, dass das Kontaktelement zumindest im Wesentlichen vollständig von dem Gehäuse umspritzt ist. Unter "zumindest im Wesentlichen vollständig umspritzt" soll in diesem Zusammenhang insbesondere verstanden werden, dass zumindest 75 %, vorzugsweise zumindest 80 %, bevorzugt zumindest 90 % und besonders bevorzugt zumindest 95 % zumindest eines Querschnitts des Kontaktelements von einem Material des Gehäuses umgeben sind und dass das Material des Gehäuses durch ein Anspritzverfahren in diesem Bereich stoffschlüssig mit dem Kontaktelement verbunden ist.

Durch die erfindungsgemäße Ausgestaltung der Dichtungseinheit des Akkumulators kann auf konstruktiv einfache und vorteilhaft kostengünstige Weise eine bevorzugt hohe und sichere Wasser- und/oder Staubdichtheit erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil eines Gehäuses des erfindungsgemäßen Akkumulators in einer schematischen, perspektivischen Draufsicht,
- Fig. 2: eine schematische, perspektivische Innenansicht eines Gehäuseoberdeckels des Gehäuses,
- Fig. 3: eine Schnittansicht durch den Gehäuseoberdeckel und
- Fig. 4: eine weitere Schnittansicht durch den Gehäuseoberdeckel.

### Beschreibung des Ausführungsbeispiels

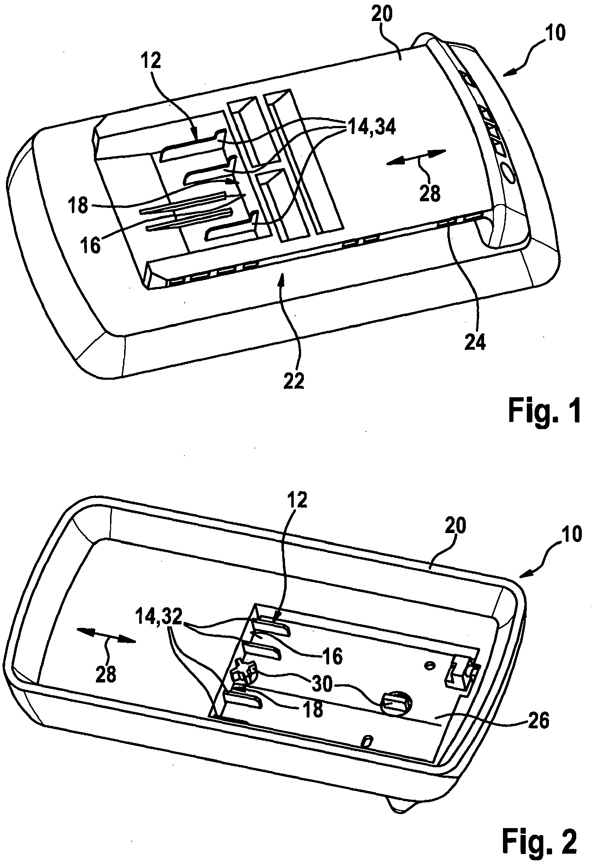

Figur 1 zeigt einen Teil eines Gehäuses 10 eines Akkumulators. Das Gehäuse 10 ist aus einem Kunststoff gebildet. Der Akkumulator ist von einem Handwerkzeugmaschinenakkumulator gebildet. Der Akkumulator ist mit einem Akkumulatoraufnahmebereich einer Handwerkzeugmaschine und/oder eines Akkumulatorladegeräts (nicht dargestellt) verbindbar ausgestaltet. Der Akkumulator umfasst mehrere nicht dargestellte Energiespeichermodule. Die Energiespeichermodule sind von Akkumulatorzellen gebildet. Die Energiespeichermodule sind in einem montierten Zustand innerhalb des Gehäuses 10 des Akkumulators angeordnet. Die Energiespeichermodule sind in einem montierten Zustand vollständig innerhalb des Gehäuses 10 des Akkumulators angeordnet.

Das Gehäuse 10 des Akkumulators umfasst eine Gehäuseoberschale 20 und eine nicht dargestellte Gehäuseunterschale. Die Gehäuseoberschale 20 und die Gehäuseunterschale sind in einem montierten Zustand miteinander verbunden. Die Gehäuseoberschale 20 und die Gehäuseunterschale sind in einem montierten Zustand fest und wasser- und/oder staubdicht miteinander verbunden. Die Gehäuseoberschale 20 berührt in einem verbundenen Zustand zumindest teilweise ein Gehäuse der Handwerkzeugmaschine oder des Akkumulatorladegeräts. Die Gehäuseoberschale 20 weist einen Kontaktbereich 22 auf, der zu einer Koppelung des Akkumulators mit dem Akkumulatoraufnahmebereich der Handwerkzeugmaschine oder des Akkumulatorladegeräts vorgesehen ist. Hierzu weist der Kontaktbereich 22 nicht näher dargestellte Befestigungselemente 24 auf, die zu einer form- und/oder kraftschlüssigen Koppelung vorgesehen sind.

Zudem weist der Akkumulator eine Kontakteinheit 12 auf. Die Kontakteinheit 12 umfasst vier Kontaktelemente 14. Ferner umfasst die Kontakteinheit 12 eine elektronische Leiterplatte 26 (Figur 2). Die Energiespeichermodule sind mit der Leiterplatte 26 der Kontakteinheit 12 verbunden. Die Energiespeichermodule sind elektrisch mit der Leiterplatte 26 der Kontakteinheit 12 verbunden. Die Leiterplatte 26 steht zudem in elektrischem Kontakt mit den Kontaktelementen 14. Die Leiterplatte 26 erstreckt sich in einem montierten Zustand parallel zu einer Haupterstreckungsrichtung 28 der Gehäuseoberschale 20 des Gehäuses 10 und ist verliersicher in der Gehäuseoberschale 20 gehalten. Hierzu sind Halteelemente 30 vorgesehen, die zu einer form- und/oder kraftschlüssigen, insbesondere lösbaren Verbindung der Leiterplatte 26 und der Gehäuseoberschale 20 des Gehäuses 10 des Akkumulators vorgesehen sind.

Jedes der Kontaktelemente 14 weist eine flache und längliche Ausgestaltung auf. Das Kontaktelement 14 ist aus einem Blech ausgestanzt. Das Kontaktelement 14 erstreckt sich durch eine Wandung 16 der Gehäuseoberschale 20 des Gehäuses 10 hindurch. Das Kontaktelement 14 weist einen in einem montierten Zustand innen liegenden Bereich 32, einen außen liegenden Bereich 34 und einen Zwischenbereich 36 auf. Der außen liegende Bereich 34 des Kontaktelements 14 ist in einem montierten Zustand außerhalb des Gehäuses 10 angeordnet. Der innen liegende Bereich 32 des Kontaktelements 14 ist in einem montierten Zustand innerhalb des Gehäuses 10 angeordnet und ist von dem Gehäuse 10 umschlossen.

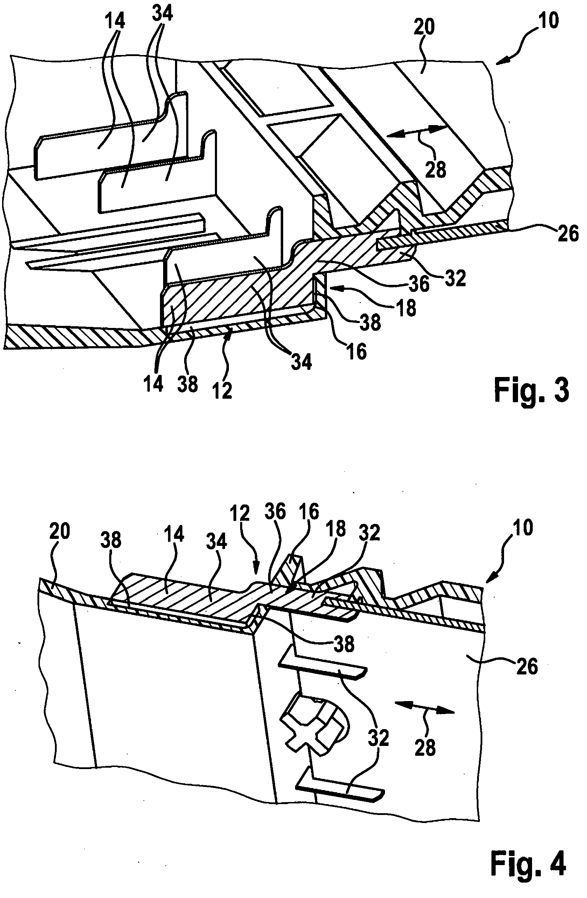

Der außen liegende Bereich 34 des Kontaktelements 14 ist zumindest im Wesentlichen L-förmig ausgestaltet, d. h. der außen liegende Bereich 34 weist zwei zumindest im Wesentlichen rechteckige Abschnitte auf, deren Haupterstreckungsrichtungen zumindest im Wesentlichen senkrecht zueinander angeordnet sind. Der außen liegende Bereich 34 des Kontaktelements 14 ist an zwei aneinander angrenzenden Kanten 38 von der Gehäuseoberschale 20 des Gehäuses 10 umspritzt (Figuren 3 und 4). Dadurch wird eine form- und stoffschlüssige Fixierung des Kontaktelements 14 relativ zu der Gehäuseoberschale 20 des Gehäuses 10 erreicht.

Der innen liegende Bereich 32 des Kontaktelements 14 umfasst mit einem dem außen liegenden Bereich 34 gegenüberliegenden Ende die Leiterplatte 26. Dadurch kann eine elektrische Verbindung zwischen dem Kontaktelement 14 und der Leiterplatte 26 hergestellt werden.

Zwischen dem innen liegenden Bereich 32 und dem außen liegenden Bereich 34 des Kontaktelements 14 ist der Zwischenbereich 36 angeordnet. Der Zwischenbereich 36 des Kontaktelements 14 ist in einer Aussparung der Wandung 16 der Gehäuseoberschale 20 des Gehäuses 10 angeordnet. Der Zwischenbereich 36 des Kontaktelements 14 ist mittels einer Dichtungseinheit 18 in der Aussparung gehalten. Die Dichtungseinheit 18 ist zu einer staub- und/oder wasserdichten Verbindung zwischen dem Kontaktelement 14 und dem Gehäuse 10 vorgesehen. Die Dichtungseinheit 18 ist einstückig mit dem Kontaktelement 14 und/oder mit dem Gehäuse 10 ausgebildet.
Die Dichtungseinheit 18 umfasst eine stoffschlüssige Verbindung zwischen dem Kontaktelement 14 und der Gehäuseoberschale 20 des Gehäuses 10. Der Zwischenbereich 36 des Kontaktelements 14 ist erfindungsgemäß vollständig von dem Gehäuse 10 umspritzt. Der Zwischenbereich 36 des Kontaktelements 14 ist in einem Winkelbereich von 360° von einem Material des Gehäuses 10 umspritzt (Figuren 3 und 4).

## Patentansprüche

1. Akkumulator, insbesondere Handwerkzeugmaschinenakkumulator, mit einem Gehäuse (10), mit zumindest einem Energiespeichermodul und mit zumindest einer Kontakteinheit (12), die zumindest ein Kontaktelement (14) aufweist, das sich durch eine Wandung (16) des Gehäuses (10) derart hindurch erstreckt, dass in einem montierten Zustand ein innen liegender Bereich (32) des Kontaktelements (14) innerhalb des Gehäuses (10) angeordnet und von dem Gehäuse (10) umschlossen ist, und ein außen liegender Bereich (34) des Kontaktelements (14) außerhalb des Gehäuses (10) angeordnet ist, wobei zumindest eine Dichtungseinheit (18) für eine staub- und/oder wasserdichte Verbindung zwischen dem Kontaktelement (14) und dem Gehäuse (10) dadurch vorgesehen ist, dass ein zwischen dem innen liegenden Bereich (32) und dem außen liegenden Bereich (34) angeordneter Zwischenbereich (36) des Kontaktelements (14) vollständig von einem Material des Gehäuses (10) umspritzt ist, **dadurch gekennzeichnet, dass** ein dem außen liegenden Bereich (34) gegenüberliegendes Ende des innen liegenden Bereichs (32) des Kontaktelements (14) mit einer elektronischen Leiterplatte (26) der Kontakteinheit (12) in einem Randbereich der Leiterplatte (26) unmittelbar elektrisch verbunden ist, wobei sich die Leiterplatte (26) parallel zu einer Haupterstreckungsrichtung (28) einer Gehäuseoberschale (20) des Gehäuses (10) derart erstreckt, dass die Leiterplatte (26) entlang der Haupterstreckungsrichtung (28) betrachtet dem außen liegenden Bereich (34) des Kontaktelements (14) nachgeordnet ist.

2. Akkumulator nach Anspruch 1, **dadurch gekennzeichnet, dass** die Leiterplatte (26) verliersicher in der Gehäuseoberschale (20) mittels zumindest eines Halteelementes (30) gehalten ist, das zu einer form- und/oder kraftschlüssigen Verbindung der Leiterplatte (26) und der Gehäuseoberschale (20) vorgesehen ist.

3. Akkumulator nach einem der vorhergehenden Ansprüche, **dadurch gekennzeichnet, dass** das dem außen liegenden Bereich (34) gegenüberliegende Ende des innen liegenden Bereichs (32) die Leiterplatte (26) umfasst.

4. Akkumulator nach einem der vorhergehenden Ansprüche, **dadurch gekennzeichnet, dass** sich das Kontaktelement (14), welches eine flache und längliche Ausgestaltung aufweist, parallel zu einer Haupterstreckungsrichtung (28) der Gehäuseoberschale (20) erstreckt.

5. Handwerkzeugmaschine mit einem Akkumulatoraufnahmebereich, der dazu vorgesehen ist, einen Akkumulator nach einem der vorhergehenden Ansprüche aufzunehmen.

6. System mit einer Handwerkzeugmaschine nach Anspruch 5 und mit zumindest einem Akkumulator nach einem der Ansprüche 1 bis 4.

## Claims

1. Rechargeable battery, in particular rechargeable battery for a hand-held power tool, comprising a housing (10), comprising at least one energy storage module and comprising at least one contact unit (12) which has at least one contact element (14) which extends through a wall (16) of the housing (10) in such a way that, in an assembled state, an inner region (32) of the contact element (14) is arranged within the housing (10) and is surrounded by the housing (10), and an outer region (34) of the contact element (14) is arranged outside the housing (10), wherein at least one sealing unit (18) for establishing a dust- and/or water-tight connection between the contact element (14) and the housing (10) is provided by an intermediate region (36) of the contact element (14), which intermediate region is arranged between the inner region (32) and the outer region (34), being completely encapsulated by a material of the housing (10), **characterized in that** an end of the inner region (32) of the contact element (14), which end is situated opposite the outer region (34), is directly electrically connected to an electronic printed circuit board (26) of the contact unit (12) in an edge region of the printed circuit board (26), wherein the printed circuit board (26) extends parallel to a main direction of extent (28) of a housing upper shell (20) of the housing (10) in such a way that the printed circuit board (26) is arranged downstream of the outer region (34) of the contact element (14) as viewed along the main direction of extent (28).

2. Rechargeable battery according to Claim 1, **characterized in that** the printed circuit board (26) is held in a captive manner in the housing upper shell (20) by means of at least one holding element (30) which is provided to establish an interlocking and/or force-fitting connection between the printed circuit board (26) and the housing upper shell (20).

3. Rechargeable battery according to either of the preceding claims, **characterized in that** that end of the inner region (32) which is situated opposite the outer region (34) surrounds the printed circuit board (26).

4. Rechargeable battery according to one of the preceding claims, **characterized in that** the contact element (14), which has a flat and elongate design, extends parallel to the main direction of extent (28) of the housing upper shell (20).

5. Hand-held power tool comprising an accommodation region for a rechargeable battery, which accommodation region is provided for accommodating a rechargeable battery according to one of the preceding claims.

6. System comprising a hand-held power tool according to Claim 5 and comprising at least one rechargeable battery according to one of Claims 1 to 4.

## Revendications

1. Accumulateur, notamment accumulateur pour des outils portatifs, comportant un boîtier (10) muni d'au moins un module de stockage d'énergie et d'au moins une unité de contact (12) qui comporte au moins un élément de contact (14), lequel s'étend à travers une paroi (16) du boîtier (10) de manière à ce que, dans un état monté, une zone interne (32) de l'élément de contact (14) soit disposée à l'intérieur du boîtier (10) et soit entourée par le boîtier (10) et qu'une zone externe (34) de l'élément de contact (14) soit située à l'intérieur du boîtier (10), dans lequel au moins une unité d'étanchéité (18) destinée à établir une liaison étanche à la poussière et/ou à l'eau est prévue entre l'élément de contact (14) et le boîtier (10) en faisant en sorte qu'une zone intermédiaire (36) disposée entre la zone interne (32) et la zone externe (34) de l'élément de contact (14) soit entièrement enrobée dans un matériau du boîtier (10), **caractérisé en ce qu'**une extrémité opposée à la zone externe (34) de la zone interne (32) de l'élément de contact (14) est directement électriquement connectée à une carte de circuit imprimé électronique (26) de l'unité de contact (12) dans une zone périphérique de la carte de circuit imprimé (26), dans lequel la carte de circuit imprimé (26) s'étend parallèlement à une direction d'extension principale (28) d'une coque supérieure de boîtier (20) du boîtier (10) de manière à ce que la carte de circuit imprimé (26), lorsqu'on l'observe dans la direction d'extension principale (28), soit disposée en aval de la zone externe (34) de l'élément de contact (14).

2. Accumulateur selon la revendication 1, **caractérisé en ce que** la carte de circuit imprimé (26) est maintenue de manière amovible dans la coque supérieure de boîtier (20) au moyen d'au moins un élément de maintien (30) qui est prévu pour établir une liaison par complémentarité de forme et/ou de force entre la carte de circuit imprimé (26) et la coque supérieure de boîtier (20).

3. Accumulateur selon l'une quelconque des revendications précédentes, **caractérisé en ce que** l'extrémité opposée à la zone externe (34) de la zone interne (32) comprend la carte de circuit imprimé (26).

4. Accumulateur selon l'une quelconque des revendications précédentes, **caractérisé en ce que** le contact (14), qui est réalisé de manière plane et longitudinale, s'étend parallèlement à une direction d'extension principale (28) de la coque supérieure de boîtier (20).

5. Outil portatif comportant une zone de réception d'accumulateur qui est prévue pour recevoir un accumulateur selon l'une quelconque des revendications précédentes.

6. Système comportant un outil portatif selon la revendication 5 et comportant au moins un accumulateur selon l'une quelconque des revendications 1 à 4.
